**Europäisches Patentamt**

**European Patent Office**

**Office européen des brevets**

(19)

(11) Veröffentlichungsnummer: **0 037 898**
**B1**

(12)

# EUROPÄISCHE PATENTSCHRIFT

(45) Veröffentlichungstag der Patentschrift:
**25.04.84**

(51) Int. Cl.³: **C 01 B 31/32**

(21) Anmeldenummer: **81101597.3**

(22) Anmeldetag: **06.03.81**

(54) **Verfahren zur Herstellung von Calciumcarbid.**

(30) Priorität: **10.04.80 DE 3013726**

(43) Veröffentlichungstag der Anmeldung:
**21.10.81 Patentblatt 81/42**

(45) Bekanntmachung des Hinweises auf die Patenterteilung:
**25.04.84 Patentblatt 84/17**

(84) Benannte Vertragsstaaten:
**AT BE DE FR GB LU NL**

(56) Entgegenhaltungen:
**DE - C - 205 260**
**DE - C - 956 579**
**DE - C - 1 025 842**
**FR - A - 835 819**
**US - A - 2 996 360**

(73) Patentinhaber: **HOECHST AKTIENGESELLSCHAFT,**
**Postfach 80 03 20, D-6230 Frankfurt am Main 80 (DE)**

(72) Erfinder: **Portz, Wilhelm, Dr., Zum Schlagbaum 2,**
**D-5042 Erftstadt-Kierdorf (DE)**
Erfinder: **Strauss, Georg, Dr., Finkenweg 8,**
**D-5042 Erftstadt-Lechenich (DE)**
Erfinder: **Stendel, Joachim, Dr., Schlaunstrasse 8,**
**D-5040 Brühl (DE)**
Erfinder: **Frorath, Friedrich-Karl, Dr.,**
**Dr.-Krauss-Strasse 7, D-5030 Hürth-Knapsack (DE)**
Erfinder: **Goldmann, Edgar, Am Qualenberg 28,**
**D-5042 Erftstadt-Lechenich (DE)**

Verfahren zur Herstellung von Calciumcarbid

Die vorliegende Erfindung betrifft ein Verfahren zur Herstellung von Calciumcarbid aus Kalk (auch Weißmaterial genannt) und einem Kohlenstoffträger (auch als Schwarzmaterial bezeichnet) in einem geschlossenen elektrothermischen Ofen mit einer Leistung von mehr als 20 MW, dessen Elektroden symmetrisch an den Ecken eines gleichseitigen Dreiecks angeordnet sind.

Elektrothermische Öfen werden seit vielen Jahrzehnten in aller Welt betrieben. Angefangen hat die Elektrothermie mit der Herstellung des Ca-Carbids. Über viele Jahrzehnte wurden Öfen kleinerer Leistung betrieben; entstehende Gase verbrannten an der Mölleroberfläche. Reaktion und Möller waren in ständiger Sichtkontrolle. Manuelle Eingriffe zur Korrektur von Unregelmäßigkeiten waren sofort während des Betriebes möglich, so daß keine sehr strengen Maßstäbe an die Beschaffenheit der Möllerkomponenten angelegt werden mußten.

So wurde beispielsweise versucht (DE-C-205 260), die übermäßige Rauchentwicklung aus den offenen Öfen, die bei der Verwendung von Anthrazit als Kohlenstoffträger eintritt, herabzusetzen, indem man den rohen, unbehandelten Anthrazit im Gemisch mit Koks oder Holzkohle einsetzte.

Ferner wurde schon vorgeschlagen (FR-A-835 819) den Gasausbrüchen und den damit verbundenen Materialverlusten dadurch zu begegnen, daß man den Innenraum der Öfen mit wassergekühlten, bis etwa in die Reaktionszone hinabreichenden Wänden in zwei voneinander getrennte Zonen unterteilt und eine dieser Zonen mit feinkörnigem Material und die andere Zone mit grobstückigem, staubfreiem Material beschickt. Dieser Vorschlag hat sich jedoch selbst bei offenen Öfen in der Praxis nicht durchsetzen können, da es höchst gefährlich ist, wassergekühlte Trennwände in einem Carbidofen anzubringen, weil der Austritt von Wasser in den Carbidofen bei einem gelegentlichen Leckwerden der Trennwände nicht absolut ausgeschlossen werden kann, was katastrophale Folgen haben würde.

Seit etwa 25 Jahren werden nun Öfen entwickelt, die aus Gründen des Umweltschutzes völlig geschlossen sind und aus wirtschaftlichen Gründen eine sehr viel höhere Leistung aufnehmen können. So ist es heute durchaus möglich, geschlossene Öfen mit einer Leistung bis zu 75 MW zu betreiben.

Die Entwicklung dieser modernen Großöfen war mit einigen Schwierigkeiten verbunden. Da ein direktes Einwirken in das Ofengeschehen während des Betriebes nicht mehr möglich war, mußten vor allem höhere Anforderungen an die Möllerzusammensetzung gestellt werden. Diese mußte so beschaffen sein, daß wenigstens einige Tage ununterbrochener Betrieb möglich war, ehe durch mechanisches Eingreifen Zusammenbackungen, Schlacken usw. beseitigt wurden.

Dies alles wurde noch erschwert, weil durch die erhebliche Steigerung der Leistungsaufnahme die Empfindlichkeit auf ungeeigneten Möller größer geworden war.

Mit dem Größerwerden der Elektroreduktionsöfen wird die Gasdurchlässigkeit der die Reaktionskessel abdeckenden Möllerschicht und der Wärmeaustausch des Gases mit dem Möller in zunehmendem Maße ein Kriterium für den erfolgreichen Betrieb dieser Öfen. Bei ungleichmäßiger Entgasung dieser Kessel treten stoßweise sehr heiße Ofengase aus, was zu Schäden an Ofenhaube, Elektroden-Fassungen und gegebenenfalls Elektrofilter-Entstaubungen führt.

Dabei hat sich auch gezeigt, daß diese Schwierigkeiten noch verstärkt werden, wenn anstelle der normalen Hüttenkokssorten schlecht reaktionsfähige Kohlenstoffträger, wie es üblicherweise Anthrazit, Petrolkoks und/oder Magerkohle sind, eingesetzt werden.

Zur Verbesserung der Gasdurchlässigkeit des Möllers und damit des Wärmeaustausches zwischen Gas und Möller wurde daher bislang ein möglichst enges Kornspektrum des Möllers mit einer gewissen Mindestkorngröße, insbesondere des Kohlenstoffträgers, angestrebt.

Der Kohlenstoffträger wurde daher vorwiegend in der Körnung 10 bis 20 mm eingesetzt. Staubanteile, d. h. Körnungen kleiner als 6 mm, mußten vorher aus dem Möller abgesiebt werden (Ullmanns Enzyklopädie der technischen Chemie, 5. Band, 3. Auflage [1954], Urban und Schwarzenberg, München – Berlin, Seiten 30 bis 33).

Aus diesem Grunde wurde schon versucht, die feinteiligen Möllerbestandteile über Hohlelektroden in elektrothermischen Verfahren einzusetzen (US-A-2 996 360).

Die Menge des auf diese Weise einsetzbaren feinteiligen Materials ist jedoch begrenzt, weil sich zwar zunächst mit zunehmendem Feststoffeintrag durch die Hohlelektroden Vorteile für den Ofenbetrieb (Herabsetzung des Elektrodenabbrandes je Zeiteinheit, tief in den Möller eintauchende Elektroden) ergeben, doch führt von einem gewissen Punkt an eine weitere Erhöhung dieses Feststoffeintrages zu einer radikalen Verschlechterung des Ofenzustandes.

Bezüglich der chemischen Zusammensetzung wurde an das Schwarzmaterial u. a. die Forderung gestellt, daß es praktisch frei von flüchtigen Bestandteilen sein solle. Für den praktischen Betrieb verwendet man deshalb in geschlossenen Großöfen überwiegend Koks.

Selbstverständlich hat man schon versucht, auch andere Schwarzmaterialien als Koks zu verwenden, vor allem Anthrazit und Petrolkoks. Der praktische Betrieb von geschlossenen Großöfen hat aber gezeigt, daß der Einsatz dieser Materialien wegen des Anteils an flüchtigen Kohlenwasserstoffen, aber auch wegen anderer Eigen-

schaften, erhebliche Schwierigkeiten bereitete. Es hat sich deshalb in Fachkreisen die Meinung gebildet, daß man dem Möller in diesen Fällen nur einen geringen Teil Anthrazit, Petrolkoks oder Magerkohle zusetzen kann (maximal bis zu etwa 25% des Schwarzmaterials, wobei die %-Angaben, wie auch im folgenden, immer als Massenprozente zu verstehen sind), wenn man den Betrieb nicht nachhaltig stören wollte. Selbst dies war nur bei gut laufenden Öfen möglich. Die Zugabe von Anthrazit, Petrolkoks oder Magerkohle wurde sofort unterbrochen, wenn Schwierigkeiten auftraten.

Für die Herstellung von Elektrodenmassen werden Anthrazit und Petrolkoks zwar seit langem calciniert; doch dieses calcinierte Material ist für den Einsatz in elektrothermischen Reduktionsöfen ungeeignet, schon wegen der zu hohen elektrischen Leitfähigkeit. Aber auch die Reaktionsfähigkeit dieser Calcinate ist vermindert, wodurch sich die Temperaturen im Ofen erhöhen. Die dadurch begünstigten Nebenreaktionen verursachen eine schnelle Verschlackung des Möllers.

Überraschenderweise wurde nun gefunden, daß es möglich ist, auch in geschlossenen elektrothermischen Öfen mit einer Leistung von mehr als 20 MW, deren Elektroden symmetrisch an den Ecken eines gleichseitigen Dreiecks angeordnet sind, im großen Umfang Anthrazit, Petrolkoks einzeln oder im Gemisch miteinander einzusetzen.

Und zwar können mindestens 40% von der insgesamt im Ofenmöller eingesetzten Kohlenstoffkomponente in Form eines Kohlenstoffträgers, bestehend aus Anthrazit, Petrolkoks und/oder Magerkohle, eingesetzt werden, wenn dieser Kohlenstoffträger mit einem ursprünglichen Gehalt an flüchtigen Bestandteilen von mehr als 5,0% bei erhöhten Temperaturen so lange thermisch vorbehandelt worden ist, bis er einen Restgehalt an flüchtigen Bestandteilen von weniger als 5,0%, vorzugsweise 1 bis 3%, aufweist, und man anschließend diesen Kohlenstoffträger in Korngrößenfraktionen von 3 bis 10 mm einerseits und größer als 10 bis 25 mm andererseits aufteilt und mit der Fraktion der kleineren Korngrößen den zentralen, zwischen den Elektroden liegenden Bereich und mit der Fraktion der größeren Korngrößen den äußeren Bereich der Mölleroberfläche im Ofen beschickt, der außerhalb des von den Elektroden gebildeten Dreiecks liegt.

Vorzugsweise führt man dabei die thermische Vorbehandlung bei Temperaturen unterhalb 1000° C, insbesondere bei Temperaturen zwischen 600 und 800° C, durch, wobei die Behandlungszeiten bekanntermaßen um so kürzer sind, je höher die Temperatur ist, und umgekehrt entsprechend länger sind, je niedriger die Temperatur ist.

Als vorteilhaft hat es sich ferner erwiesen, wenn man dem Ofen gleichzeitig bis zu 25% der im Ofenmöller insgesamt eingesetzten Kohlenstoffkomponente in Form von Koksstaub durch Hohlelektroden zuführt, wobei der Koksstaub bis zu 50% Anthrazitstaub enthalten kann.

Weitere Ausgestaltungen des erfindungsgemäßen Verfahrens sind, daß man in dem Möller insgesamt eine Kohlenstoffkomponente einsetzt, die neben dem erfindungsgemäß vorbehandelten Kohlenstoffträger bis zu 60% Koks enthält, oder daß man in dem Möller insgesamt eine Kohlenstoffkomponente einsetzt, die neben dem erfindungsgemäß vorbehandelten Kohlenstoffträger bis zu 60% eines Gemisches enthält, das aus Koks einerseits sowie unbehandeltem Anthrazit, Petrolkoks und/oder Magerkohle andererseits im Verhältnis 1 : 1 besteht.

Ferner ist es auch möglich, in dem Möller insgesamt eine Kohlenstoffkomponente einzusetzen, die neben dem erfindungsgemäß vorbehandelten Kohlenstoffträger bis zu 30% unbehandelten Anthrazit, Petrolkoks und/oder Magerkohle enthält, oder daß man sogar eine solche Kohlenstoffkomponente einsetzt, die zu 100% aus dem erfindungsgemäß vorbehandelten Kohlenstoffträger besteht.

Zweckmäßigerweise wird das Massenverhältnis von Schwarz-/Weißmaterial im gesamten Möller auf etwa 1 : 1,5 bis 1,6 einstellt, so daß ein Carbid erhalten wird, das bei Umsetzung mit Wasser 280 bis 300 l Acetylen/kg liefert. Doch sind auch andere Fahrweisen des Ofens möglich.

Die nachfolgenden Beispiele sollen das neue Verfahren näher erläutern, ohne die Erfindung auf den Inhalt dieser Beispiele beschränken zu wollen.

### Beispiel 1

Anthrazit der folgenden Analyse

| | |
|---|---|
| Körnung | 6 – 30 mm |
| Wasser | 6,3% |
| Asche | 12,4% |
| Flüchtige Kohlenwasserstoffe | 9,8% |
| Elektr. Widerstand bei 20° C | $10^7 \, \Omega$ cm |

wird in einem Röhrenofen mit indirekter Beheizung unter Ausschluß von Luft ca. $1^1/_2$ Stunden auf 850° C erhitzt. Danach hat der trockene Anthrazit noch einen Gehalt von 1,9% flüchtiger Kohlenwasserstoff und einen elektrischen Widerstand von $0,8 \times 10^2 \, \Omega$ cm. Aus diesem Material werden dann die 2 Fraktionen der Körnung 3 – 10 mm und 10 – 22 mm ausgesiebt.

Mit diesen beiden Fraktionen wird ein Carbidofen geschlossener Bauart mit einer Leistungsaufnahme von max. 55 MW beschickt, und zwar die feinere Körnung in den zentralen, zwischen den Elektroden liegenden Bereich des Ofens, die gröbere Körnung in den äußeren (peripheren) Bereich. Die Mischung mit Kalk wird überall gleichmäßig im Verhältnis 1 Teil Anthrazit : ca. 1,6 Teilen Kalk eingestellt.

Der Carbidofen ist mit Hohlelektroden ausgerüstet. Durch diese wird eine Mischung von normalem Koksgrus (Körnung 0−6 mm) und Feinkalk im Verhältnis 1 : 1,6 eingeblasen, die ca. 15% des gesamten Möllers ausmacht. Der Ofen kann so einwandfrei betrieben werden.

Eine Bilanz von 8 Stunden Betrieb hatte folgendes Ergebnis:

Verbräuche:
   351 000 KWh ( ∼ ∅ 44 MWh/h)
      56 t Anthrazit
      10 t Koksgrus
      90 t Stückkalk
      15 t Feinkalk
Produktion:
   110 t Carbid mit 293 l $C_2H_2$/kg

Die Laufzeit des Ofens von einer notwendigen Kontrolle bis zur nächsten ist unter den angegebenen Bedingungen etwa die gleiche wie bei der üblichen Fahrweise mit Koks.

Beispiel 2

Das bei der Aufarbeitung des Anthrazits in die beiden Kornfraktionen anfallende Feinmaterial 0−3 mm wird dem Koksgrus für die Hohlelektrode zugemischt. Es fällt bei dieser Aufarbeitung etwa so viel Feinanthrazit an, daß bei vollständiger Verarbeitung dieses Materials die Schwarzkomponente der Hohlelektrode aus einer Mischung von ca. 1 Teil Koksgrus und 1 Teil Anthrazit besteht.

Im übrigen wird verfahren wie im Beispiel 1.

Das erzielte Ergebnis ist im Rahmen der Fehlergrenzen das gleiche wie im Beispiel 1.

Beispiel 3

Es wird grundsätzlich verfahren wie im Beispiel 1, nur wird dem Anthrazit nach dem Entgasen unbehandelter Anthrazit in einer solchen Menge zugegeben, daß die Mischung ca. 30% rohen Anthrazit enthält. Zugegeben wird allerdings vor dem Abkühlen des Anthrazits, damit das Wasser des unbehandelten Anthrazits verdampfen kann, jedoch nicht die Kohlenwasserstoffe.

Die Verbräuche bei diesem Versuch sind ebenfalls im Rahmen der Fehlergrenze gleich wie im Beispiel 1. Lediglich die Literzahl des produzierten Carbids beträgt nur 285 l $C_2H_2$/kg.

Der Ofen hat bei dieser Fahrweise jedoch eine deutlich stärkere Neigung, an der Oberfläche des Möllers Schlacke zu bilden. Dies macht ein etwas häufigeres Kontrollieren und Korrigieren des Ofenganges notwendig. Die Häufigkeit der damit verbundenen Betriebsunterbrechung ist bei dieser Fahrweise gerade noch so hoch, daß von einem noch vertretbaren Betrieb gesprochen werden kann.

Beispiel 4

Petrolkoks der Körnung 6−35 mm und einem Gehalt an flüchtigen Kohlenwasserstoffen von 9,7%, 6% $H_2O$ und Asche kleiner als 1% wird im gleichen Ofen wie im Beispiel 1 beschrieben erhitzt, jedoch auf eine Temperatur von 750° C und einer Verweilzeit von ca. 2 Stunden. Danach enthält der Koks noch 2,8% flüchtige Kohlenwasserstoffe, und der elektrische Widerstand beträgt $1,6 \times 10^2 \Omega$ cm. Aufgearbeitet wird der Koks dann wie im Beispiel 1, eingesetzt im Carbidofen wird der Koks ebenfalls wie in Beispiel 1 beschrieben. Lediglich das Verhältnis Koks : Kalk wird auf 1 Teil Koks zu 1,5 Teilen Kalk eingestellt. Die Hohlelektrode wird mit normalem Koksgrus beschickt.

Ergebnis einer 8-Stunden-Bilanz:

Verbräuche:
   438 000 KWh ( ∼ ∅ 55 MWh/h)
      115 t Petrolkoks
       20 t Koksgrus
       77 t Stückkalk
       13 t Feinkalk
Produktion:
   145 t Carbid mit 298 l $C_2H_2$/kg.

Der Ofenbetrieb ist normal, Kontrollen sind nicht öfter notwendig als beim üblichen Betrieb mit Hüttenkoks.

**Patentansprüche**

1. Verfahren zur Herstellung von Calciumcarbid aus Kalk und einem Kohlenstoffträger in einem geschlossenen elektrothermischen Ofen mit einer Leistung von mehr als 20 MW, dessen Elektroden symmetrisch an den Ecken eines gleichseitigen Dreiecks angeordnet sind, dadurch gekennzeichnet, daß man zumindest 40% von der insgesamt im Ofenmöller eingesetzten Kohlenstoffkomponente in Form eines Kohlenstoffträgers, bestehend aus Atnhrazit, Petrolkoks und/oder Magerkohle, einsetzt, nachdem dieser Kohlenstoffträger mit einem ursprünglichen Gehalt an flüchtigen Bestandteilen von mehr als 5,0% bei erhöhten Temperaturen so lange thermisch vorbehandelt worden ist, bis er einen Restgehalt an flüchtigen Bestandteilen von weniger als 5,0% aufweist, dann diesen Kohlenstoffträger in Korngrößenfraktionen von 3 bis 10 mm einerseits und größer als 10 bis 25 mm andererseits aufteilt und mit der Fraktion der kleineren Korngrößen den zentralen, zwischen den Elektroden liegenden Bereich und mit der Fraktion der größeren Korngrößen den äußeren Bereich der Mölleroberfläche im Ofen beschickt, der außerhalb des von den Elektroden gebildeten Dreiecks liegt.

2. Verfahren nach Anspruch 1, dadurch gekennzeichnet, daß man den Kohlenstoffträger bei Temperaturen zwischen 600 und 800° C thermisch vorbehandelt.

3. Verfahren nach Anspruch 1 oder 2, dadurch gekennzeichnet, daß man den Kohlenstoffträger so lange thermisch vorbehandelt, bis er einen Restgehalt an flüchtigen Bestandteilen von 1 bis 3% aufweist.

4. Verfahren nach einem der Ansprüche 1 bis 3, dadurch gekennzeichnet, daß man gleichzeitig bis zu 25% der im Ofenmöller insgesamt eingesetzten Kohlenstoffkomponente dem Ofen in Form von Koksstaub durch Hohlelektroden zuführt, wobei der Koksstaub bis zu 50% Anthrazitstaub enthalten kann.

5. Verfahren nach einem der Ansprüche 1 bis 4, dadurch gekennzeichnet, daß man in dem Möller insgesamt eine Kohlenstoffkomponente einsetzt, die neben dem erfindungsgemäß vorbehandelten Kohlenstoffträger bis zu 60% Koks enthält.

6. Verfahren nach einem der Ansprüche 1 bis 4, dadurch gekennzeichnet, daß man in dem Möller insgesamt eine Kohlenstoffkomponente einsetzt, die neben dem erfindungsgemäß vorbehandelten Kohlenstoffträger bis zu 60% eines Gemisches enthält, das aus Koks einerseits sowie unbehandeltem Anthrazit, Petrolkoks und/oder Magerkohle andererseits im Verhältnis 1 : 1 besteht.

7. Verfahren nach einem der Ansprüche 1 bis 4, dadurch gekennzeichnet, daß man in dem Möller insgesamt eine Kohlenstoffkomponente einsetzt, die neben dem erfindungsgemäß vorbehandelten Kohlenstoffträger bis zu 30% unbehandeltem Anthrazit, Petrolkoks und/oder Magerkohle enthält.

8. Verfahren nach einem der Ansprüche 1 bis 3, dadurch gekennzeichnet, daß man in dem Möller eine Kohlenstoffkomponente einsetzt, die zu 100% aus dem erfindungsgemäß vorbehandelten Kohlenstoffträger besteht.

## Claims

1. Process for making clacium carbide from lime and a carbon carrier in a closed electrothermal furnace with a power of more than 20 megawatts, in which the electrodes are arranged symmetrically in the corners of an equilateral triangle, which comprises: using at least 40% of the total carbon component in the furnace burden in the form of a carbon carrier consisting of anthracite, petroleum coke and/or lean coal, the carbon carrier with an initial content of volatile constituents of more than 5.0% having been subjected to thermal pretreatment at increased temperature for as long as necessary to establish a residual content of volatile constituents of less than 5.0% and having been separated into a fraction consisting of particles with a size of 3 to 10 mm and into a fraction consisting of particles with a size of more than 10 up to 25 mm; the fraction of smaller particles being introduced into a central region inside the furnace lying between the electrodes, and the fraction of larger particles being introduced into a peripheral region of the burden surface area inside the furnace which lies outside the triangle formed by the electrodes.

2. Process as claimed in claim 1, wherein the carbon carrier is thermally pretreated at temperatures between 600 and 800°C.

3. Process as claimed in claim 1 or 2, wherein the carbon carrier is thermally pretreated for as long as necessary to establish a residual content of volatile constituents of 1 to 3%.

4. Process as claimed in any of claims 1 to 3, wherein up to 25% of the total carbon component present in the burden is simultaneously introduced in the form of coke dust into the furnace through hollow electrodes, the coke dust containing up to 50% of anthracite dust, if desired.

5. Process as claimed in any of claims 1 to 4, wherein the carbon component used in the burden contains the carbon carrier pretreated in accordance with this invention together with up to 60% of coke.

6. Process as claimed in any of claims 1 to 4, wherein the carbon component used in the burden contains the carbon carrier pretreated in accordance with this invention together with up to 60% of a mixture consisting of coke, on the one hand, and of untreated anthracite, petroleum coke and/or lean coal, on the other hand, in the ratio of 1 : 1.

7. Process as claimed in any of claims 1 to 4, wherein the carbon component used in the burden contains the carbon carrier pretreated in accordance with this invention together with up to 30% of untreated anthracite, petroleum coke and/or lean coal.

8. Process as claimed in any of claims 1 to 3, wherein the carbon component used in the burden consists to an extent of 100% of the carbon carrier pretreated in accordance with this invention.

## Revendications

1. Procédé de préparation de carbure de calcium à partir de chaux et d'un véhicule de carbone dans un four électro-thermique fermé d'une puissance absorbée supérieure à 20 MW, dont les électrodes sont agencées symétriquement aux sommets d'un triangle équilatéral, caractérisé en ce que l'on utilise au moins 40% de la totalité du composant carbone présent dans le lit de fusion sous forme d'un véhicule de carbone consistant en anthracite, coke de pétrole et/ou houille maigre, après qu'on a au préalable traité thermiquement ce véhicule de carbone à des températures élevées pour abaisser sa teneur initiale en constituants volatils supérieure à 5,0% à une teneur résiduaire en constituants volatils inférieure à 5,0%, puis on le subdivise, d'une part, en une fraction d'une granulométrie de 3−10 mm et, d'autre part, en une fraction d'une granulométrie de plus de 10 jusqu'à 25 mm, et on charge le four avec la fraction des particules plus

5

petites dans la région centrale se situant entre les électrodes et avec la fraction des particules plus grandes dans la région extérieure de la surface du lit de fusion à l'intérieur du four, cette dernière région étant située en dehors du triangle formé par les électrodes.

2. Procédé selon la revendication 1, caractérisé en ce que l'on soumet le véhicule de carbone au traitement thermique préalable à des températures comprises entre 600 et 800°C.

3. Procédé selon la revendication 1 ou 2, caractérisé en ce que l'on soumet le véhicule de carbone au traitement thermique préalable jusqu'à ce qu'il présente une teneur résiduaire en constituants volatils de 1−3%.

4. Procédé selon l'une des revendications 1 à 3, caractérisé en ce que l'on introduit simultanément dans le four par des électrodes creuses de la poussière de coke en quantité allant jusqu'à 25% de la totalité du composant carbone présent dans le lit de fusion, la poussière de coke pouvant contenir jusqu'à 50% de poussière d'anthracite.

5. Procédé selon l'une des revendications 1 à 4, caractérisé en ce que l'on utilise au total dans le lit de fusion un composant carbone contenant, outre le véhicule de carbone traité préliminairement selon l'invention, jusqu'à 60% de coke.

6. Procédé selon l'une des revendications 1 à 4, caractérisé en ce que, dans le lit de fusion, on utilise au total un composant carbone contenant, outre le véhicule de carbone traité au préalable selon l'invention, jusqu'à 60% d'un mélange constitué d'une part de coke et d'autre part d'anthracite, coke de pétrole et/ou houille maigre non traité dans le rapport 1 : 1.

7. Procédé selon l'une des revendications 1 à 4, caractérisé en ce que l'on utilise au total dans le lit de fusion un composant carbone contenant, outre le véhicule de carbone traité au préalable selon l'invention, jusqu'à 30% d'anthracite, de coke de pétrole et/ou houille maigre non traité.

8. Procédé selon l'une des revendications 1 à 3, caractérisé en ce que, dans le lit de fusion, on utilise un composant carbone consistant à 100% en véhicule de carbone traité au préalable selon l'invention.